# EUROPÄISCHE PATENTANMELDUNG

(11) **EP 4 421 326 A1**
(43) Veröffentlichungstag der Anmeldung: **28.08.2024**
(21) Anmeldenummer: 24154397.4
(22) Anmeldetag: 29.01.2024
(51) Int. Cl.: F04D 29/16, F16J 15/447

(54) **KREISELPUMPE, INSBESONDERE BOHRLOCHPUMPE**

(30) Priorität: 21.02.2023 BE 202305128
(71) Anmelder: WILO SE, 44263 Dortmund (DE)
(72) Erfinder: Kohler, Henry, 44263 Dortmund (DE); Sorge, Robert, 44263 Dortmund (DE)
(74) Vertreter: Michalski Hüttermann & Partner Patentanwälte mbB

(57) **Zusammenfassung**

Gegenstand der Erfindung ist eine Kreiselpumpe, insbesondere Bohrlochpumpe, mit einem Laufrad (3) aufweisend einen saugseitig orientierten, das Laufrad (3) radial begrenzenden Laufring (6) und einem den Laufring (6) derart radial einfassenden Spaltring (7), dass zwischen dem Spaltring (7) und dem Laufring (6) ein sich axial erstreckender Dichtspalt (8) ausgebildet ist, wobei an dem Laufring (6) dem Dichtspalt (8) zugewandt wenigstens ein sich axial erstreckender Sägezahn (9) mit einem saugseitig orientierten Spanwinkel α > 0° ausgebildet ist.

## Beschreibung

### Technisches Gebiet

Die Erfindung betrifft eine Kreiselpumpe, insbesondere Bohrlochpumpe, mit einem Laufrad aufweisend einen saugseitig orientierten, das Laufrad radial begrenzenden Laufring und einem den Laufring derart radial einfassenden Spaltring, dass zwischen dem Spaltring und dem Laufring ein sich axial erstreckender Dichtspalt ausgebildet ist. Die Erfindung betrifft ferner ein Verfahren zum Herstellen einer Kreiselpumpe, insbesondere Bohrlochpumpe, mit einem Laufrad aufweisend einen saugseitig orientierten, das Laufrad radial begrenzenden Laufring und einem den Laufring derart radial einfassenden Spaltring, dass zwischen dem Spaltring und dem Laufring ein sich axial erstreckender Dichtspalt ausgebildet ist.

### Hintergrund der Erfindung

Kreiselpumpen sind aus dem Stand der Technik bekannt und dienen zum Fördern eines Fluids mittels einer Drehbewegung eines in einem Pumpengehäuse der Kreiselpumpe vorgesehenen Laufrades. Das Laufrad wird mittels einer Rotorwelle durch einen Motor der Kreiselpumpe angetrieben. Bohrlochpumpen als spezielle Ausgestaltung einer Kreiselpumpe werden regelmäßig zum Fördern von Wasser oder Erdöl als Fluid insbesondere aus unterirdischen Vorkommen verwendet. Derartige Bohrlochpumpen werden in ein Bohrloch bis zum Eintauchen in das Fluid oder in eine fluidführende Bodenschicht abgesenkt und verbleiben dort. Gegenüber einer Kreiselpumpe weisen Bohrlochpumpen in der Regel mehrere axial bzw. vertikal übereinander angeordnete Laufräder auf.

Um einem hohen hydraulischen Wirkungsgrad solcher Pumpen zu erreichen, sollten Volumenstromverluste zwischen dem sich drehenden Laufrad und dem beststehenden Pumpengehäuse oder einem darin vorgesehenen Spaltring möglichst geringgehalten werden. Bei berührungslosen Dichtungen ist daher ein kleinstmöglicher Dichtspalt zwischen Laufrad und Spaltring vorzusehen. Bei Verwendung von metallischen Werkstoffen für Laufrad und Spaltring kann jedoch ein Festfressen des sich drehenden Laufrads und dem feststehenden Spaltring auftreten, insbesondere im Fall von im Fluid enthaltenen Feststoffen, was das Betriebsverhalten negativ beeinflusst.

### Beschreibung der Erfindung

Ausgehend von dieser Situation ist es eine Aufgabe der vorliegenden Erfindung, eine Kreiselpumpe, insbesondere eine Bohrlochpumpe, anzugeben, bei der gegenüber aus dem Stand der Technik bekannten Kreiselpumpen Volumenstromverluste am Laufradhals verringert sind und ein stabiles Betriebsverhalten gewährleistet ist.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Kreiselpumpe, insbesondere Bohrlochpumpe, mit
einem Laufrad aufweisend einen saugseitig orientierten, das Laufrad radial begrenzenden Laufring und
einem den Laufring derart radial einfassenden Spaltring, dass zwischen dem Spaltring und dem Laufring ein sich axial erstreckender Dichtspalt ausgebildet ist, wobei
an dem Laufring und/oder dem Spaltring dem Dichtspalt zugewandt wenigstens ein sich axial erstreckender Sägezahn mit einem saugseitig orientierten Spanwinkel α > 0° ausgebildet ist.

Ein wesentlicher Aspekt der vorgeschlagenen Lösung liegt darin, den Laufring und/oder den Spaltring dem Dichtspalt zugewandt mit dem sich axial erstreckenden Sägezahn auszugestalten, also im Vergleich zu aus dem Stand der Technik bekannten Ausgestaltungen gerade nicht eben auszubilden. Zwar sind aus dem Stand der Technik labyrinthartige Dichtungen zwischen Laufring und Spaltring bekannt, jedoch führen solche labyrinthartigen Dichtungen regelmäßig zu keinem hohen Druckverlust zwischen Laufring und Spaltring und entsprechend verringerten hydraulischen Wirkungsgrad der Kreiselpumpe. Durch die vorgeschlagene ,Teslaventilartige' Ausgestaltung lassen sich jedoch derartige Volumenstromverluste effektiv reduzieren. Insbesondere bei Bohrlochpumpen, die in der Regel eine Mehrzahl hintereinander geschalteter Laufräder aufweisen, ist aufgrund geringer Radialkräfte und daraus resultierender geringer Wellendurchbiegung, bei keinem oder nur minimalen Kontakt des Laufrades mit dem Spaltring, die vorgeschlagene Lösung besonders sinnvoll.

Das Merkmal Sägezahn mit einem saugseitig orientierten Spanwinkel α > 0° meint insbesondere eine, in Seitansicht, ,Teslaventilartige' Ausgestaltung des Laufrings und/oder des Spaltrings, wodurch ein Strömungswiderstand von einer Druckseite hinzu der Saugseite vergrößert wird. Da druckseitig hinter dem Laufrad ein höherer Druck als saugseitig vor dem Laufrad herrscht, entsteht im regulären Betrieb der Kreiselpumpe ein Volumenstrom durch den Dichtspalt von der Druckseite hin zur Saugseite. Dieser Volumenstrom verringert wie zuvor beschrieben den hydraulischen Wirkungsgrad der Kreiselpumpe. Durch Vorsehen des wenigstens einen Sägezahns mit dem saugseitig orientierten Spanwinkel α > 0° wird der von der Druckseite stammende Volumenstrom wenigstens zum Teil wieder zurück in Richtung Druckseite umgelenkt.

Mit anderen Worten ist das in Rede stehende Merkmal insbesondere als in Seitansicht nutartige Form mit insbesondere deutlicher Hinterschneidung in Richtung der Saugseite zu verstehen. Noch anders formuliert ist das in Rede stehende Merkmal insbesondere so zu verstehen, dass eine Zahnbrust des Sägezahns druckseitig orientiert ist, während ein Zahnrücken des Sägezahns saugseitig orientiert ist, wobei jedoch ein Spanraum des Sägezahns einen Unterschliff > 0 mm aufweist. Der Unterschliff, als Hinterschnitt, kann beispielsweise 0.5 mm, 1 mm oder 1.5 mm betragen oder 1/5, 1/6, 1/7 oder 1/8 einer Zahnteilung des Sägezahns betragen. Mit noch anderen Worten weist der Sägezahn in Seitansicht bevorzugt eine tropfartige in den Laufring und den Spaltring eingebrachte Form auf.

Grundsätzlich kann das Laufrad wie ein aus dem Stand der Technik bekanntes Laufrad gestaltet sein, wobei der Laufring bevorzugt in axialer Draufsicht kreisrund und/oder ringförmig gestaltet ist. Der Spaltring liegt bevorzugt radial umlaufend mittels des Dichtspalt an dem Laufring an und/oder ist bevorzugt in axialer Draufsicht ebenso kreisrund, röhrenförmig und/oder ringförmig gestaltet. Mit anderen Worten liegt der Spaltring bevorzugt gerade nicht berührend an dem Laufring an. Weiter bevorzugt weisen sowohl der Laufring als auch der Spaltring eine jeweils den Dichtspalt begrenzende und gegenüberliegende Fläche auf, die sich axial erstreckt. Bevorzugt ist der Sägezahn an dieser Fläche vorgesehen. Die Begriffe axial und/oder radial sind bevorzugt auf eine Achse des Laufrads und/oder eine Achse einer das Laufrad antreibenden Pumpenwelle bezogen.

Als Kreiselpumpe wird im Allgemeinen eine Strömungsmaschine bezeichnet, die eine Drehbewegung und dynamische Kräfte zur Förderung überwiegend von Flüssigkeiten als Fluid nutzt. Neben einer tangentialen Beschleunigung des Fluids, auch Medium genannt, wird in radialer Strömung auftretende Fliehkraft zur Förderung genutzt, so dass Kreiselpumpen ebenso als Zentrifugalpumpen bezeichnet werden. Das Fluid umfasst bevorzugt Wasser oder ein sonstiges flüssiges Medium. Die Kreiselpumpe kann beispielsweise als Bohrlochpumpe gestaltet sein. Die Kreiselpumpe kann ebenso als mehrstufige Pumpe zur Druckerhöhung oder als sogenannte vertical turbine gestaltet sein. Ferner ist auch eine einstufige Pumpe für Anwendungen im Abwasser denkbar. Das Laufrad ist bevorzugt in einem Pumpengehäuse vorgesehen, dass durch einen in einem Motorgehäuse anordenbaren Motor antreibbar ist. Zwischen dem Motor und dem Laufrad kann eine Pumpenwelle vorgesehen sein. Die Ausgestaltung des Motors, das Laufrad und/oder der Pumpenwelle kann wie aus dem Stand der Technik bekannt erfolgen.

Gegenüber einer Kreiselpumpe, wie sie beispielsweise bei Heizungen verwendet wird, zeichnet sich eine Bohrlochpumpe oftmals durch eine Mehrzahl, beispielsweise zwei, drei oder noch mehr, hintereinander geschalteter Laufräder aus, wodurch sich besonders hohe Förderhöhen realisieren lassen. Bohrlochpumpen, auch Unterwassermotorpumpen oder Vertikalpumpen genannt, lassen sich bevorzugt in enge Bohrlöcher oder Brunnen mit einem geringen Innendurchmesser einsetzen. Dazu weisen die Bohrlochpumpen bevorzugt ein zylinderartiges Gehäuse bzw. ist in Form eines Zylinders auf, welcher Zylinder in das Bohrloch einführbar ist. Neben Fluiden wie Wasser oder Abwasser lassen sich mit Bohrlochpumpen oftmals auch Erdöl fördern.

Gemäß einer bevorzugten Weiterbildung beträgt der Spanwinkel α ≥ 2.5°, 5°, 10°, 15°, 20° oder 25° beträgt und/oder der Dichtspalt so gering wie möglich, insbesondere > 0 oder ≥ 0,1 mm und ≤ 1, 0,75, 0,5, 0,25 oder 0,2 mm, insbesondere 0,15 mm. Als Spanwinkel wird insbesondere der Winkel zwischen der Zahnbrust und der Radialen bzw. einer Normalen des Dichtspalts bzw. einer Zahnhöhe verstanden. Als Breite des Lichtspalt wird insbesondere der radiale Abstand zwischen einer Zahnspitzenlinie, also als wenn kein Sägezahn in die entsprechende Fläche des Spaltrings und/oder des Laufrings eingefügt wäre, und, sofern kein Sägezahn in die gegenüberliegende Fläche des Laufrings und/oder des Spaltrings eingefügt ist, der entsprechenden Fläche des Laufrings und/oder des Spaltrings oder, sofern in die gegenüberliegende Fläche des Laufrings und/oder des Spaltrings ebenso ein Sägezahn eingefügt ist, der gegenüberliegenden Zahnspitzenlinie. Sofern eine Mehrzahl Sägezähne vorgesehen sind, können die jeweiligen Spanwinkel gleich groß sein oder auch variieren, beispielsweise in Volumenstromrichtung zunehmen oder abnehmen. Ebenso oder alternativ können bei Sägezähnen sowohl an dem Laufring sowie an dem Spaltring die Spanwinkel an dem Laufring und an dem Spaltring gleich groß oder unterschiedlich groß sein.

Nach einer anderen bevorzugten Ausgestaltung ist ein Zahngrund des Sägezahns kreisbogenartig und/oder eine Zahnbrust und/oder ein Zahnrücken des Sägezahns linear ausgebildet. Da der Spanwinkel > 0° ist, kann in den Spanraum einströmendes Fluid durch den kreisbogenartig gestalteten Zahngrund in seiner Strömungsrichtung umgelenkt werden, um in der Folge, nachdem das derart umgelenkte Fluid entlang der Zahnbrust aus dem Spanraum in den Dichtspalt herausströmt, den von der Druckseite hin zur Saugseite führenden Volumenstrom abbremsen.

Gemäß einer anderen bevorzugten Weiterbildung sind eine Mehrzahl in einer axialen Reihe angeordneter Sägezähne vorgesehen. Bevorzugt ist die gesamte sich axial erstreckende dem Dichtspalt vorgesehene Fläche des Laufrings und/oder des Spaltrings mit Sägezähnen versehen, die in regelmäßigen Abständen und/oder unmittelbar aufeinanderfolgend an der Fläche angeordnet sind. Bevorzugt ist die Zahnteilung der Sägezähne gleich. Darüber hinaus ist auch denkbar, dass die Zahnteilung entlang der Fläche variiert, beispielsweise in Richtung des Volumenstroms größer oder kleiner wird. Ebenso ist denkbar, dass, wenn an dem Laufring und an dem Spaltring jeweils wenigstens ein Sägezahn mit einem jeweiligen Spanraum vorgesehen ist, die Sägezähne des Laufrings und des Spaltrings unterschiedliche Zahnteilungen aufweisen. Schließlich sind auch Kombinationen der vorgenannten Varianten möglich.

Wie zuvor bereits beschrieben, ist nach einer bevorzugten Ausgestaltung an dem Laufring oder an dem Spaltring der wenigstens eine Sägezahn vorgesehen und an dem Spaltring oder an dem Laufring gegenüberliegend zu dem wenigstens einen Sägezahn eine ebene, sich axial erstreckende Fläche vorgesehen. Gemäß einer anderen bevorzugten Weiterbildung ist an dem Laufring und an dem Spaltring jeweils wenigstens ein Sägezahn mit einem jeweiligen Spanraum vorgesehen und sind die Spanräume des Laufrings und des Spaltrings axial gegeneinander versetzt angeordnet. Das bedeutet insbesondere, dass die Zahnteilung des Laufrings und des Spaltrings axial versetzt zueinander angeordnet sind.

Nach einer anderen bevorzugten Ausgestaltung beträgt eine Zahnteilung des Sägezahns ≥ 2 mm und ≤ 4 mm, insbesondere 3 mm, und/oder eine Zahnhöhe des Sägezahns ≥ 1 mm und ≤ 2 mm, insbesondere 1,5 mm. Darüber hinaus sind auch andere Werte denkbar.

Gemäß einer anderen bevorzugten Weiterbildung weist die Kreiselpumpe ein Pumpengehäuse auf, wobei der Spaltring an dem Pumpengehäuse angeordnet oder einstückig mit dem Pumpengehäuse ausgeführt ist. Das Pumpengehäuse ist bevorzugt aus Metall, Edelstahl oder Grauguss gestaltet und/oder weist eine zylinderartige Form auf. Der Spaltring ist bevorzugt aus einem Metall ausgeführt. Alternativ ist denkbar, dass sowohl der Spaltring und/oder der Laufring aus einem Kunststoff oder additiv ausgeführt sind.

Nach einer anderen bevorzugten Ausgestaltung erstreckt sich der wenigstens eine Sägezahn radial umlaufend um das Laufrad herum. Bevorzugt sind 3, 4, 5, 6, 7, 8, 9 oder 10 Reihen axial übereinander vorgesehene Sägezähne vorgesehen. Gemäß einer weiteren bevorzugten Weiterbildung erstreckt sich der wenigstens eine Sägezahn schrauben- und/oder helixartig um das Laufrad herum. Nach einer ganz besonders bevorzugten Ausgestaltung ist eine Steigung des wenigstens einen schrauben- und/oder helixartigen Sägezahns saugseitig weg orientiert. Durch eine derartige Steigung kann durch Drehung des Laufrads eine Förderwirkung entgegen dem Volumenstrom im Dichtspalt bewirkt werden.

Die Aufgabe der Erfindung wird weiterhin gelöst durch eine Bohrlochpumpe mit einer Mehrzahl axial übereinander angeordneten Laufrädern und Spaltringen gemäß einer zuvor beschriebenen Kreiselpumpe. Ein solche Bohrlochpumpe weist insofern bevorzugt eine Mehrzahl axial übereinander angeordneter Laufräder jeweils aufweisend einen saugseitig orientierten, das jeweilige Laufrad radial begrenzenden Laufring und einem den jeweiligen Laufring derart radial einfassenden jeweiligen Spaltring, dass zwischen dem jeweiligen Spaltring und dem jeweiligen Laufring ein sich axial erstreckender jeweiliger Dichtspalt ausgebildet ist, wobei an dem jeweiligen Laufring und/oder dem jeweiligen Spaltring dem jeweiligen Dichtspalt zugewandt wenigstens ein sich axial erstreckender jeweiliger Sägezahn mit einem saugseitig orientierten jeweiligen Spanwinkel α > 0° ausgebildet ist. Bevorzugt sind die jeweiligen Spanwinkel gleich groß, können jedoch auch wie zuvor beschrieben variieren, beispielsweise in Strömungsrichtung größer oder kleiner werden.

Die Aufgabe der Erfindung wird ferner weiterhin gelöst ein Verfahren zum Herstellen einer Kreiselpumpe, insbesondere Bohrlochpumpe, mit
einem Laufrad aufweisend einen saugseitig orientierten, das Laufrad radial begrenzenden Laufring und
einem den Laufring derart radial einfassenden Spaltring, dass zwischen dem Spaltring und dem Laufring ein sich axial erstreckender Dichtspalt ausgebildet ist, und mit dem Schritt:
   Einbringen wenigstens eines an dem Laufring und/oder dem Spaltring dem Dichtspalt zugewandten sich axial erstreckenden Sägezahns mit einem saugseitig orientierten Spanwinkel α > 0°.

Das Einbringen erfolgt beispielsweise mechanisch, insbesondere durch Fräsen und/oder Drehen. Ebenso ist denkbar, dass im Falle von gegossenem Pumpengehäuse und/oder Laufrad eine Form mit entsprechenden Negativsägezähnen versehen ist.

Weitere Ausgestaltungen und/oder Vorteile der Bohrlochpumpe und/oder des Verfahrens ergeben sich für den Fachmann analog zu der zuvor beschriebenen Kreiselpumpe.

### Kurze Beschreibung der Zeichnungen

Nachfolgend wird die Erfindung unter Bezugnahme auf die anliegenden Zeichnungen anhand bevorzugter Ausführungsbeispiele näher erläutert.

### In den Zeichnungen zeigen

- Fig. 1: eine schematische Schnittansicht einer Kreiselpumpe als Bohrlochpumpe gemäß einem bevorzugten Ausführungsbeispiel der Erfindung,
- Fig. 2a: eine schematisch perspektivische Schnittansicht eines Laufrads der Kreiselpumpe der Fig. 1 gemäß dem bevorzugten Ausführungsbeispiel der Erfindung,
- Fig. 2b: eine schematisch perspektivische Schnittansicht eines Teils eines Spaltrings und eines Laufrings des Laufrads der Kreiselpumpe der Fig. 2a gemäß dem bevorzugten Ausführungsbeispiel der Erfindung,
- Fig. 3a: eine schematisch perspektivische Schnittansicht des Laufrads der Kreiselpumpe der Fig. 1 gemäß dem weiteren bevorzugten Ausführungsbeispiel der Erfindung,
- Fig. 3b: eine schematisch perspektivische Schnittansicht des Teils des Spaltrings und des Laufrings des Laufrads der Kreiselpumpe der Fig. 3a gemäß dem bevorzugten Ausführungsbeispiel der Erfindung,
- Fig. 4a: eine schematisch perspektivische Schnittansicht des Laufrads der Kreiselpumpe der Fig. 1 gemäß dem noch weiteren bevorzugten Ausführungsbeispiel der Erfindung,
- Fig. 4b: eine schematisch perspektivische Schnittansicht des Teils des Spaltrings und des Laufrings des Laufrads der Kreiselpumpe der Fig. 4a gemäß dem bevorzugten Ausführungsbeispiel der Erfindung,
- Fig. 5: eine schematisch perspektivische Ansicht des Laufrads der Kreiselpumpe der Fig. 1 gemäß dem weiteren bevorzugten Ausführungsbeispiel der Erfindung, und
- Fig. 6: eine schematische Draufsicht des Teils des Spaltrings und des Laufrings des Laufrads der Kreiselpumpe der Fig. 2a gemäß dem bevorzugten Ausführungsbeispiel der Erfindung.

### Detaillierte Beschreibung der Ausführungsbespiele

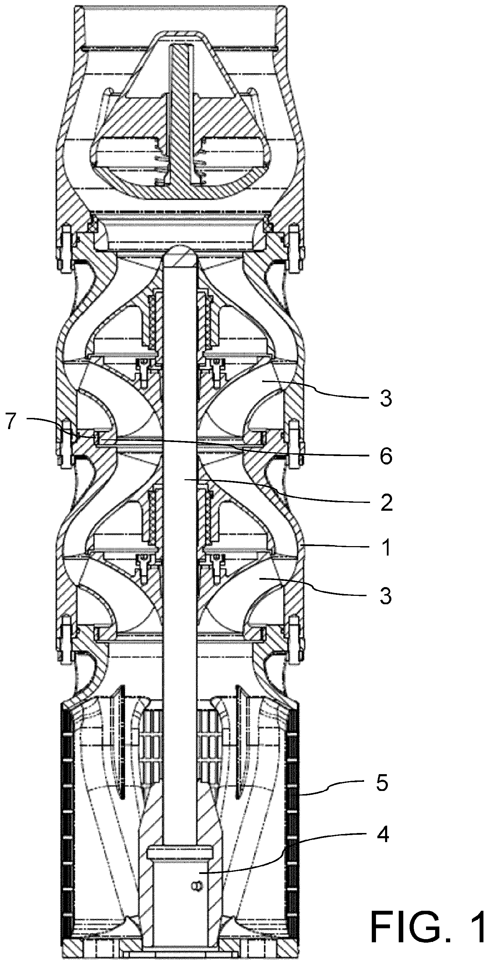

Fig. 1 zeigt eine schematische Schnittansicht einer Kreiselpumpe als Bohrlochpumpe gemäß einem bevorzugten Ausführungsbeispiel der Erfindung.

Die Bohrlochpumpe weist ein sich längs, in der Figur vertikal erstreckendes rohrartiges Pumpengehäuse 1 auf. In dem Pumpengehäuse 1 ist eine sich längs erstreckende, eine Längsachse definierende Pumpenwelle 2 vorgesehen, auf der zwei beabstandet voneinander angeordnete Laufräder 3 sitzen. Die Laufräder 3 werden durch einen nicht gezeigten Motor angetrieben, der mittels einer Kupplung 4 mit der Pumpenwelle 2 verbunden ist. Im Bereich der Kupplung 4 unterhalb des unteren Laufrad 3 sind außen, sich an dem Pumpengehäuse 1 axial erstreckende Einlässe 5 für durch die Bohrlochpumpe zu förderndes Fluids vorgesehen. Das derart in das Pumpengehäuse 1 eintretende Fluid wird zunächst durch das untere Laufrad 3 und in der Folge durch das obere Laufrad 3 gefördert, um dann an einem oberen nicht gezeigten Ende des Pumpengehäuses 1 aus der Bohrlochpumpe auszutreten.

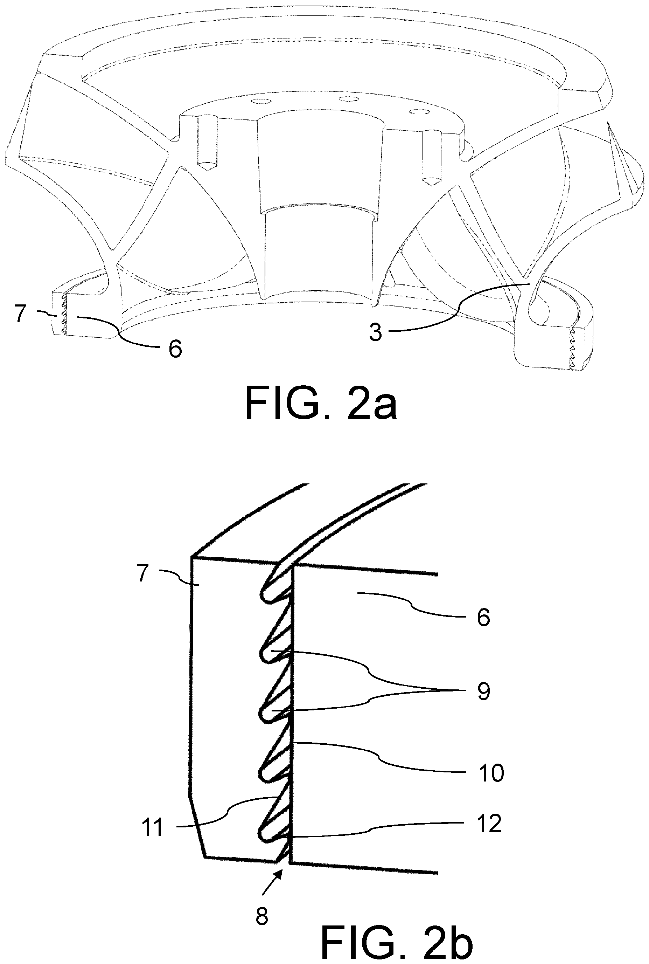

Die Laufräder 3, im Detail gezeigt in den Figs. 2a, 3a und 4a gemäß unterschiedlichen Ausgestaltungen, weisen saugseitig jeweils einen das Laufrad 3 radial begrenzenden, mit dem Laufrad 3 einstückig geformten Laufring 6 auf, der in axialer Draufsicht auf das Laufrad 3 ebenso dieses ringförmig gestaltet ist. Der Laufring 6 ist radial eingefasst durch einen ebenso ringförmig gestalteten Spaltring 7, der berührend an dem Pumpengehäuse 1 anliegt. In alternativer, nicht gezeigter Ausgestaltung kann der Spaltring 7 einstückig mit dem Pumpengehäuse 1 geformt sein. Ebenso kann Laufring 6 und das Laufrad 3 ein- oder zweistückig gestaltet sein. Zwischen dem Spaltring 7 und dem Laufring 6 ist derart ein Dichtspalt 8 mit einer Breite von 0,1 mm bis 0,15 mm ausgestaltet, wie aus den einen Ausschnitt der Figs. 2a, 3a und 4a zeigenden Figs. 2b, 3b und 4b zu erkennen.

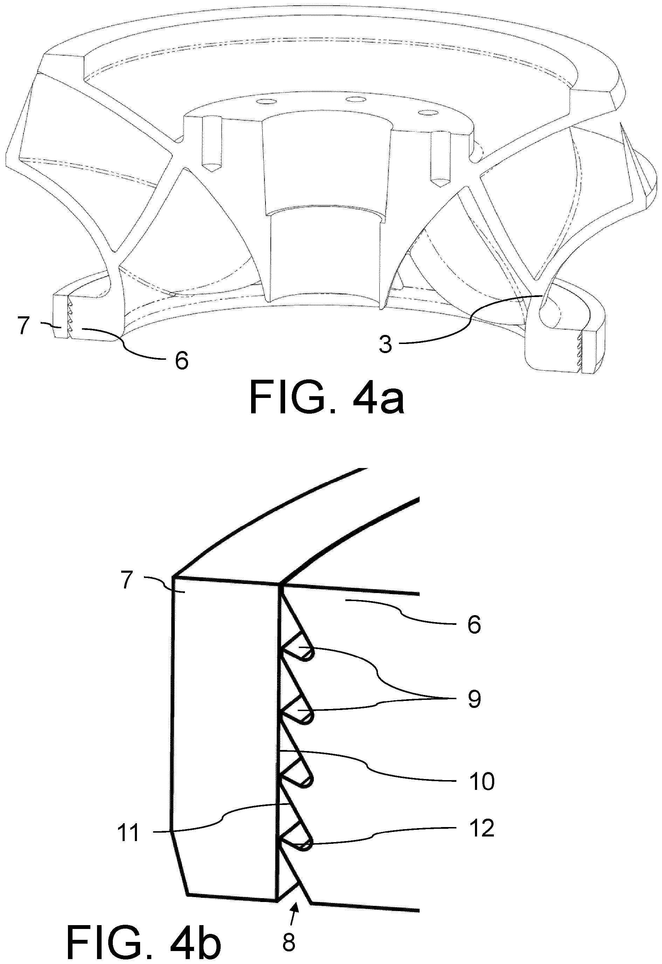

Wie weiter aus den Fig. 2 und 4 zu erkennen, weisen der Spaltring 7 und/der der Laufring 6 jeweils eine sich axial erstreckende Fläche 10 auf, die den Dichtspalt 8 beidseitig radial begrenzt und sich ringartig um die Pumpenwelle 2 herum erstreckt. Bei aus dem Stand der Technik bekannten Kreiselpumpen sind beide Flächen 10 eben gestaltet. Bei der vorgeschlagenen Kreiselpumpe weist wenigstens eine der beiden Flächen 10 eine ,Teslaventilartige' Struktur auf, wodurch ein Strömungswiderstand des Dichtspalts 8 von einer oberen Druckseite hin zu einer unteren Saugseite erhöht wird.

Konkret ist die ,Teslaventilartige' Struktur durch eine Mehrzahl Sägezähne 9 ausgebildet, die in axialer Reihe entlang wenigstens einer der beiden Flächen 10 in regelmäßigen Abständen angeordnet sind. Ein Spanwinkel α aller Sägezähne 9 ist jeweils saugseitig orientiert und ist > 0°, wobei der Spanwinkel α vorliegend 20° beträgt. Daneben sind andere Spanwinkel α denkbar, wie beispielsweise α ≥ 2.5°, 5°, 10°, 15°, 26° oder 30°. Ein regelmäßig von der Druckseite hin zur Saugseite durch den Dichtspalt 8 führender Volumenstrom wird durch die ,Teslaventilartige' Struktur gebremst, da in die Sägezähne 9 einströmendes Fluid des Volumenstrom umgelenkt und derart dem einströmenden Volumenstrom entgegenwirkt.

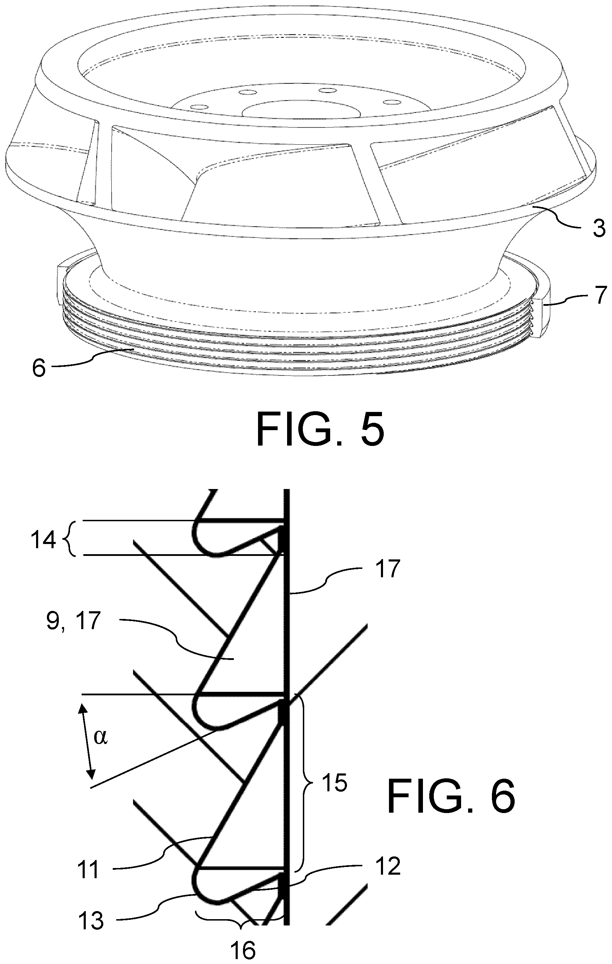

Das bedeutet, wie im Detail aus Fig. 6 ersichtlich, die einen Ausschnitt des Spaltrings 7 sowie des Laufrings 6 zeigt, dass bei jedem Sägezahn 9 ein jeweiliger Zahnrücken 11 saugseitig, also in der Figur nach unten, orientiert und eben gestaltet ist, während eine jeweilige Zahnbrust 12 druckseitig, also in der Figur nach oben, orientiert und eben gestaltet ist. Ferner ist bei jedem Sägezahn 9 ein zwischen Zahnrücken 11 und Zahnbrust 12 befindliche Zahngrund 13 kreisbogenartig ausgeführt. Jeder Sägezahn 9 hat einen Unterschliff 14 von 0,75 mm, der saugseitig orientiert ist. Eine Zahnteilung 15 jedes Sägezahns 9 beträgt 3 mm, während eine Zahnhöhe 16 jedes Sägezahns 9 1,5 mm beträgt. Die Zahnteilung 15 kann ebenso ≥ 2 mm und ≤ 4 mm betragen und die Zahnhöhe 16 kann ≥ 1 mm und ≤ 2 mm betragen.

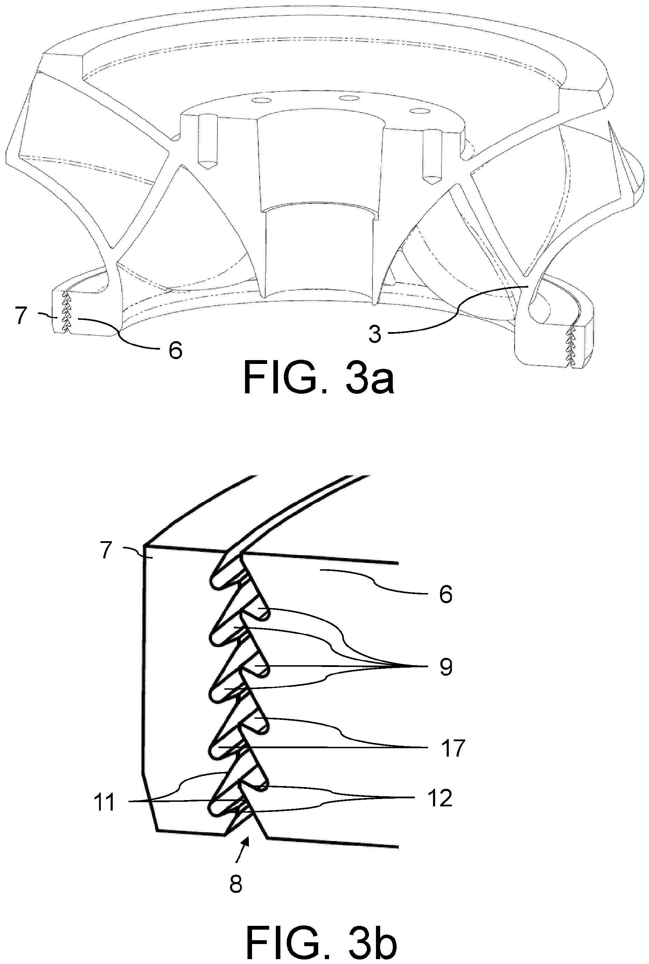

Während in dem Ausführungsbeispiel in Figs. 2a und 2b die axiale Fläche 10 des Laufrings 6 eben ohne Sägezähne 9 ausgeführt ist, sind an dem Spaltring 7 korrespondierend zu der axialen Fläche 10 des Laufrings 6 die Mehrzahl Sägezähne 9 vorgesehen. In dem Ausführungsbeispiel der Figs. 3a und 3b sind sowohl an dem Laufring 6 als auch an dem Spaltring 7 jeweils die Mehrzahl Sägezähne 9 vorgesehen. Dabei sind Spanräume 17 der Sägezähne 9 des Laufrings 6 und des Spaltrings 7 axial gegeneinander versetzt angeordnet sind. Schließlich zeigt das Ausführungsbeispiel in Figs. 4a und 4b, dass die axiale Fläche 10 des Spaltrings 7 eben ohne Sägezähne 9 ausgeführt ist, während an dem Laufring 6 korrespondierend zu der axialen Fläche 10 des Spaltrings 7 die Mehrzahl Sägezähne 9 vorgesehen sind.

Fig. 5 zeigt eine schematisch perspektivische Ansicht des Laufrads 3 der Kreiselpumpe der Fig. 1 gemäß dem weiteren bevorzugten Ausführungsbeispiel der Erfindung. Wie auch bereits bei den Ausführungsbeispielen gemäß der Figs. 2a, 3a und 4a erstrecken sich die Mehrzahl Sägezahne 9 radial umlaufend um das Laufrad 3 bzw. den Laufring 6 herum, was ebenso für die Sägezahne 9 des Spaltrings 7 gilt. Zusätzlich, was ebenso für die Ausführungsbeispiele gemäß der Figs. 2a und 4a möglich, erstrecken sich die Sägezähne 9 nicht auf gleicher axialer Höhe, sondern schrauben- und/oder helixartig um das Laufrad 3 herum. Eine Steigung der schrauben- und/oder helixartigen Sägezähne 9 ist saugseitig weg orientiert.

Zum Herstellen der Kreiselpumpe bzw. Bohrlochpumpe mit dem derartigen Laufrad 3 mit dem saugseitig orientierten, das Laufrad 3 radial begrenzenden Laufring 6 und dem den Laufring 6 derart radial einfassenden Spaltring 7, dass zwischen dem Spaltring 7 und dem Laufring 6 der sich axial erstreckende Dichtspalt 8 ausgebildet ist erfolgt der Schritt des Einbringens des wenigstens eines an dem Laufring 6 und/oder dem Spaltring 7 dem Dichtspalt 8 zugewandten sich axial erstreckenden Sägezahns 9 mit einem saugseitig orientierten Spanwinkel α > 0°, insbesondere mittels Fräsen.

Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

| | |
|---|---|
| Pumpengehäuse | 1 |
| Pumpenwelle | 2 |
| Laufrad | 3 |
| Kupplung | 4 |
| Einlass | 5 |
| Laufring | 6 |
| Spaltring | 7 |
| Dichtspalt | 8 |
| Sägezahn | 9 |
| Fläche | 10 |
| Zahnrücken | 11 |
| Zahnbrust | 12 |
| Zahngrund | 13 |
| Unterschliff | 14 |
| Zahnteilung | 15 |
| Zahnhöhe | 16 |
| Spanraum | 17 |
| Spanwinkel | α |

## Patentansprüche

1. Kreiselpumpe, insbesondere Bohrlochpumpe, mit
einem Laufrad (3) aufweisend einen saugseitig orientierten, das Laufrad (3) radial begrenzenden Laufring (6) und
einem den Laufring (6) derart radial einfassenden Spaltring (7), dass zwischen dem Spaltring (7) und dem Laufring (6) ein sich axial erstreckender Dichtspalt (8) ausgebildet ist, wobei
an dem Laufring (6) dem Dichtspalt (8) zugewandt wenigstens ein sich axial erstreckender Sägezahn (9) mit einem saugseitig orientierten Spanwinkel α > 0° ausgebildet ist.

2. Kreiselpumpe nach dem vorhergehenden Anspruch, wobei an dem Spaltring (7) dem Dichtspalt (8) zugewandt wenigstens ein sich axial erstreckender Sägezahn (9) mit einem saugseitig orientierten Spanwinkel α > 0° ausgebildet ist.

3. Kreiselpumpe nach einem der vorhergehenden Ansprüche, wobei der Spanwinkel α ≥ 2.5°, 5°, 10°, 15°, 20° oder 25° beträgt und/oder der Dichtspalt (8) ≥ 0,1 mm und ≤ 0,2 mm, insbesondere 0,15 mm, beträgt.

4. Kreiselpumpe nach einem der vorhergehenden Ansprüche, wobei ein Zahngrund (13) des Sägezahns (9) kreisbogenartig und/oder eine Zahnbrust (12) und/oder ein Zahnrücken (11) des Sägezahns (9) linear ausgebildet ist.

5. Kreiselpumpe nach einem der vorhergehenden Ansprüche, mit einer Mehrzahl in einer axialen Reihe angeordneter Sägezähne (9).

6. Kreiselpumpe nach einem der vorhergehenden Ansprüche, wobei an dem Laufring (6) oder an dem Spaltring (7) gemäß Anspruch 2 der wenigstens eine Sägezahn (9) vorgesehen ist und an dem Spaltring (7) oder an dem Laufring (6) gemäß Anspruch 2 gegenüberliegend zu dem wenigstens einen Sägezahn (9) eine ebene, sich axial erstreckende Fläche (10) vorgesehen ist.

7. Kreiselpumpe nach einem der vorhergehenden Ansprüche, wobei an dem Laufring (6) und an dem Spaltring (7) gemäß Anspruch 2 jeweils wenigstens ein Sägezahn (9) mit einem jeweiligen Spanraum vorgesehen ist und die Spanräume des Laufrings (6) und des Spaltrings (7) gemäß Anspruch 2 axial gegeneinander versetzt angeordnet sind.

8. Kreiselpumpe nach einem der vorhergehenden Ansprüche, wobei eine Zahnteilung (15) des Sägezahns (9) ≥ 2 mm und ≤ 4 mm, insbesondere 3 mm, und/oder eine Zahnhöhe (16) des Sägezahns (9) ≥ 1 mm und ≤ 2 mm, insbesondere 1,5 mm, beträgt.

9. Kreiselpumpe nach einem der vorhergehenden Ansprüche, mit einem Pumpengehäuse, wobei der Spaltring (7) an dem Pumpengehäuse angeordnet oder einstückig mit dem Pumpengehäuse ausgeführt ist.

10. Kreiselpumpe nach einem der vorhergehenden Ansprüche, wobei sich der wenigstens eine Sägezahn (9) radial umlaufend um das Laufrad (3) herum erstreckt.

11. Kreiselpumpe nach dem vorhergehenden Anspruch, wobei sich der wenigstens eine Sägezahn (9) schrauben- und/oder helixartig um das Laufrad (3) herum erstreckt

12. Kreiselpumpe nach dem vorhergehenden Anspruch, wobei eine Steigung des wenigstens einen schrauben- und/oder helixartigen Sägezahns (9) saugseitig weg orientiert ist.

13. Bohrlochpumpe mit einer Mehrzahl axial übereinander angeordneten Laufrädern (3) und Spaltringen (7) gemäß einer Kreiselpumpe nach einem der vorhergehenden Ansprüche.

14. Verfahren zum Herstellen einer Kreiselpumpe, insbesondere Bohrlochpumpe, mit
einem Laufrad (3) aufweisend einen saugseitig orientierten, das Laufrad (3) radial begrenzenden Laufring (6) und
einem den Laufring (6) derart radial einfassenden Spaltring (7), dass zwischen dem Spaltring (7) und dem Laufring (6) ein sich axial erstreckender Dichtspalt (8) ausgebildet ist, und mit dem Schritt:
Einbringen wenigstens eines an dem Laufring (6) dem Dichtspalt (8) zugewandten sich axial erstreckenden Sägezahns (9) mit einem saugseitig orientierten Spanwinkel α > 0°.

15. Verfahren nach dem vorhergehenden Anspruch, mit dem Schritt:
Einbringen wenigstens eines an dem Spaltring (7) dem Dichtspalt (8) zugewandten sich axial erstreckenden Sägezahns (9) mit einem saugseitig orientierten Spanwinkel α > 0°.
